# EUROPEAN PATENT APPLICATION

(11) **EP 2 693 515 A1**
(43) Date of publication of application: **05.02.2014**
(21) Application number: 11862185.3
(22) Date of filing: 07.09.2011
(51) Int. Cl.: H01M 2/10, B62J 11/00, B62M 6/40

(54) **BATTERY PACK AND ELECTRIC BICYCLE**

(30) Priority: 31.03.2011 JP 2011078301; 31.03.2011 JP 2011078302; 31.03.2011 JP 2011078303; 31.03.2011 JP 2011078304; 31.03.2011 JP 2011078305
(71) Applicant: NEC Energy Devices, Inc., Chuo-ku Sagamihara-shi, Kanagawa 252-5298 (JP)
(72) Inventor: SUZUKI, Toru, Sagamihara-shi Kanagawa 252-5298 (JP)
(74) Representative: Günther, René
(86) International application number: PCT/JP2011/005029
(87) International publication number: WO 2012/131799

(57) **Abstract**

*To provide a battery pack that is less likely to be affected by vibrations, shocks and the like and has a stable characteristic, and an electric bicycle that uses the battery pack.*

*A battery pack includes: battery connecting structures in which a plurality of flat batteries is placed; cushioning members that are disposed in two directions, which cross each other at right angles, of outer surfaces of the battery connecting structures; and a housing section that houses the battery connecting structures in such a way that clearance between outer surfaces of the cushioning members of one direction is positive, and that clearance between outer surfaces of the cushioning members of the other direction is negative.*

## Description

### BACKGROUND OF THE INVENTION

### FIELD OF THE INVENTION

The present invention relates to a battery pack, which is formed by connecting a plurality of secondary batteries, and an electric bicycle in which the battery pack is installed.

### DESCRIPTION OF RELATED ART

In electric bicycles, various kinds of secondary batteries are used as power sources for drive or auxiliary drive. Among the above secondary batteries, a lithium ion secondary battery, in which charge and discharge take place as lithium ions move between positive and negative electrodes, is preferably used as a battery for a drive power source because the lithium ion secondary battery has the following battery characteristics: high energy density and high output power.

The following lithium ion batteries are known: a lithium ion battery that is in the shape of a cylinder around which positive and negative electrodes are stacked and wound via separators; and a flat lithium ion battery in which positive and negative electrodes are stacked via separators.

Among the above lithium ion batteries, the flat lithium ion battery is preferably used as a battery for a power source of a device driving motor or the like because it is easy to increase capacity per unit battery by increasing the number of positive and negative electrodes stacked or by increasing the areas of positive and negative electrodes.

As for a unit battery of the flat lithium ion battery, it is possible to make effective use of the high energy density that the lithium ion battery has by covering battery elements with a film casing material.

The film-covered battery is used in various ways. For example, what is proposed in Patent Document 1 (JP-A-2007-257901) is a battery pack for an electric bicycle that uses a film-covered battery.

### SUMMARY OF THE INVENTION

The following electric bicycles are known: an electric bicycle that is designed to reduce burden on a rider when the bicycle is running with the help of an operation of an attached motor; and an electric bicycle that can be self-propelled even when a rider is not pedaling. A motor, a driving device, and a motor-driving battery add to the mass of an electric bicycle. Therefore, such devices are required to be smaller in mass. The electric bicycles require a large-capacity battery when running a long distance or for a long time in order to make use of an operation of a motor.

Among the various kinds of batteries, a lithium ion battery that is large in gravimetric energy density and volumetric energy density i s preferabl y used for an electric bicycle. Among the above batteries, a film-covered battery, which is covered with a film casing material, is characterized by high energy efficiency compared with a battery for which a metal can is used as a casing material.

There is an electric bicycle whose wheel is mounted on a bearing that is attached to the body of the bicycle via a suspension. However, the impact imposed on the bicycle body is significantly different from that on an automobile. Therefore, a battery pack attached to the body of the bicycle is greatly affected by shocks and vibrations from a road surface.

Meanwhile, the film-covered battery, which is excellent in energy density, is covered with a thin film casing material. Accordingly, in many cases, great importance is attached to taking measures to handle shocks and vibrations, as well as to heat-release performance, when compared with a battery stored in a metal casing can. However, when a batterypack is mounted on an electric bicycle, the battery pack, unlike that of an automobile, could be easily exposed to the outside air; little consideration is given to measures for the fact that the battery pack is easily exposed to liquid. Even in the battery pack disclosed in Patent Document 1, a heat collection member is provided in the following manner so as to draw the generated heat away from the flat film-covered battery: a gap is provided between heat collection plates at both edge portions, and an intermediate heat collection plate is disposed. However, no measure is taken to handle liquid. When liquid gets into the battery pack, corrosion of wires and other components in the battery pack and other troubles could occur. Thus, it is important to take measures to deal with liquid.

In the battery pack disclosed in Patent Document 1, a heat collection member is provided in the following manner so as to draw the generated heat away from the flat film-covered battery: a gap is provided between heat collection plates at both edge portions, and an intermediate heat collection plate is disposed. However, it takes a great deal of effort to insert a low-rigidity flat battery into a space whose three sides are open between the heat collection plates without deformation of the battery and any other troubles.

If the gap becomes widened to make it easier to insert the flat battery, a space emerges between the intermediate heat collection plate and the battery. As a result, thermal contact of a unit battery with a heat collection plate becomes poor. On the other hand, when the gap is small, it is difficult to complete the task for a short period of time. In the battery pack disclosed in Patent Document 1, three sides of the heat collection member are open. Accordingly, the battery pack is insufficient in terms of measures for fixing of the film-covered battery, vibrations and shocks.

Moreover, for a battery pack mounted on a bicycle, a space in which the battery pack is mounted is limited. As a location that does not hinder a rider from pedaling and steering and does not have adverse effects on running performance, there is generally the following location to which the battery pack is attached: a seatpost, or a rear portion of a seat tube that connects a bottom bracket and the seatpost. In order for a large-capacity, large-size battery pack to be mounted on the above location, a gap between a rear end, to which a rear wheel is attached, and a bottom bracket is required to be made larger. However, if the gap is made larger, the wheelbase inevitably becomes long and large in size, making it difficult to ride the bicycle. Moreover, for a battery pack in which a large number of unit batteries are mounted in order to increase the battery's capacity, what is required is to efficiently and evenly draw the charging energy of the batteries from each battery.

The present invention is intended to provide a pack which can stably hold a battery whose volume capacity density is large, such as a film-covered battery in which an opening of a lithium ion secondary battery is sealed with a film casing material, while mitigating vibrations and shocks from a bicycle, and which enables a large-capacity battery to be attached without a change in the structure of the bicycle. Moreover, the assembling and maintenance of the battery back are easy; the battery pack can operate in a stable manner for a long period of time.

To solve the above problems, a battery pack of the present invention includes: battery connecting structures in which a plurality of flat batteries is placed; cushioning members that are disposed in two directions, which cross each other at right angles, of outer surfaces of the battery connecting structures; and a housing section that houses the battery connecting structures in such a way that clearance between outer surfaces of the cushioning members of one direction is positive, and that clearance between outer surfaces of the cushioning members of the other direction is negative.

In the battery pack, the battery connecting structures include a battery protective member having a first plate section and a second plate section, which is integrally connected to both edge portions of a width direction of the first plate section and extends substantially in a direction perpendicular to both surfaces of the first plate section; and the flat batteries are placed on the first plate section.

According to the present invention, the situation called "substantially perpendicular" includes a situation where it is effectively possible to obtain perpendicular and desired operations and effects, for example, including an angle of 80 to 100 degrees.

In the battery pack, a direction in which the clearance is positive is a direction parallel to a bottom face of the housing section.

Moreover, in the battery pack, a surface on which flat batteries are placed is formed on both surfaces of the first plate section.

In the battery pack, a flat-plate surface of the flat battery is put on the first plate section.

In the battery pack, the flat batteries are film-covered batteries.

In the battery pack, pull-out tabs of the flat batteries are taken out in a longer direction of the first plate section of the protective member.

In the battery pack, one adhesive side of a two-sidedadhesive tape is attached to the flat battery, which then adheres to the first plate section or an adjoining flat battery surface.

An electric bicycle includes the above battery pack.

According to the present invention, the situation called "substantially perpendicular" includes a situation where it is effectively possible to obtain perpendicular and desired operations and effects, for example, including an angle of 80 to 100 degrees.

Moreover, in the battery pack, a surface on which flat batteries are placed is formed on both surfaces of the first plate section.

In the battery pack, a flat-plate surface of the flat battery is put on the first plate section.

In the battery pack, the flat batteries are film-covered batteries.

In the battery pack, pull-out tabs of the flat batteries are taken out in a longer direction of the first plate section of the protective member.

In the battery pack, one adhesive side of a two-sidled adhesive tape is attached to the flat battery, which then adheres to the first plate section or an adjoining flat battery surface.

An electric bicycle includes the above battery pack.

According to the battery pack of the present invention, the battery pack includes two battery connecting structures in which a plurality of flat batteries, such as lithium ion batteries or other batteries that are excellent in energy efficiency, are covered with film casing material, placed on a plate section of a battery protective member, and connected electrically, with the length of a direction in which the flat batteries are placed different from the length of a direction perpendicular to the placing direction. In the battery pack, the two battery connecting structures are disposed so that a surface of the placing direction of one battery connecting structure and a surface of the placing direction of the other battery connecting structure cross each other at right angles. Therefore, when the placing directions are so set as to be perpendicular to the front-back direction of a bicycle, even a large-size battery pack can be housed without making the wheelbase of the bicycle longer. Therefore, it is possible to provide a bicycle on which a large-capacity battery pack is mounted in a way that does not obstruct a rider who is driving and operating. Moreover, in the battery pack, wires for a protective circuit board, which protects batteries during the charging and discharging of the batteries, are equal in length. Therefore, the battery pack is not adversely affected by shocks and vibrations. Moreover, the impedances of the two battery connecting structures are equal, resulting in a stable operation.

Moreover, for a housing section of a battery connecting structure of a distance between outer surfaces of a cushioning member that is attached to a surface that extends in a direction perpendicular to the battery connecting structure, one clearance is made positive, and the other negative. Therefore, the battery connecting structure can be easily stored in one case body; when another case body is attached and fixed, it is definitely possible to fix the battery connecting structure as another case body is being pushed. Thus, it is possible to provide a battery pack that is more stable against vibrations and shocks.

Moreover, a plurality of drain holes is provided in the battery pack, making it possible to smoothly drain out water, which gets into the inside or is caused by condensation. Therefore, it is possible to provide a highly reliable battery pack. In particular, a vehicle, such as an electric bicycle, could be laid drown and abandoned when not in use. Therefore, the following structure is extremely effective: the battery pack that is divided into a plurality of compartments in order to allow water to be drained out at any time.

Moreover, even in the batteries that are in use, the battery pull-out tabs are disposed upward rather than being substantially in a horizontal direction. Therefore, if the battery pack is constantly affected by vibrations and shocks when being used for a long time as in a battery pack of an electric bicycle, and even if a force is repeatedly applied to the battery pack in the direction of gravitational force, short-circuit and other troubles of the pull-out tabs do not arise. Therefore, it is possible to provide a highly reliable battery pack.

### BRIEF DESCRIPTION OF THE DRAWINGS

FIG. 1 is a diagram showing a unit battery 100 that makes up a battery pack according to an embodiment of the present invention. FIG. 1A is a diagram showing the unit battery 100 whose opening is sealed with heat-sealing sections formed on four sides. FIG. 1B is a diagram showing the unit battery 100 whose opening is sealed with heat-sealing sections formed on three sides.
FIG. 2 is a diagram showing how to connect a connection tab 125 to a positive-electrode pull-out tab 120 of the unit battery 100.
FIG. 3 is a diagram showing the situation where holes are made on a positive pull-out tab and negative pull-out tab for connecting unit batteries 100 in series.
FIG. 4 is a diagram illustrating a holder member 200 that makes up the battery pack according to the embodiment of the present invention.
FIG. 5 is a perspective view of a board 300 that is used in connecting unit batteries 100 in series in the battery pack according to the embodiment of the present invention.
FIG. 6 is a diagram illustrating a battery protective member 400 that makes up the battery pack according to the embodiment of the present invention.
FIG. 7 is a diagram illustrating a process of producing a battery connecting structure 500 that makes up the battery pack according to the embodiment of the present invention.
FIG. 8 is a diagram illustrating a process of producing the battery connecting structure 500 that makes up the battery pack according to the embodiment of the present invention.
FIG. 9 is a diagram illustrating a process of producing the battery connecting structure 500 that makes up the battery pack according to the embodiment of the present invention.
FIG. 10 is a diagram illustrating a process of producing the battery connecting structure 500 that makes up the battery pack according to the embodiment of the present invention.
FIG. 11 is a diagram illustrating a process of producing the battery connecting structure 500 that makes up the battery pack according to the embodiment of the present invention.
FIG. 12 is a diagram illustrating a process of producing the battery connecting structure 500 that makes up the battery pack according to the embodiment of the present invention.
FIG. 13 is a diagram illustrating a process of producing the battery connecting structure 500 that makes up the battery pack according to the embodiment of the present invention.
FIG. 14 is a diagram illustrating a process of producing the battery connecting structure 500 that makes up the battery pack according to the embodiment of the present invention.
FIG. 15 is a diagram illustrating a process of producing the battery connecting structure 500 that makes up the battery pack according to the embodiment of the present invention.
FIG. 16 is a diagram illustrating a process of producing the battery connecting structure 500 that makes up the battery pack according to the embodiment of the present invention.
FIG. 17 is a diagram illustrating a process of producing the battery connecting structure 500 that makes up the battery pack according to the embodiment of the present invention.
FIG. 18 is a diagram illustrating a process of producing a batterypack according to the embodiment of the present invention.
FIG. 19 is a diagram illustrating a process of producing the battery pack according to the embodiment of the present invention.
FIG. 20 is a diagram illustrating a process of producing the battery pack according to the embodiment of the present invention.
FIG. 21 is a diagram illustrating a process of producing the battery pack according to the embodiment of the present invention.
FIG. 22 is a diagram illustrating a process of producing the battery pack according to the embodiment of the present invention.
FIG. 23 is a diagram illustrating a process of producing the battery pack according to the embodiment of the present invention.
FIG. 24 is a diagram illustrating a process of producing the battery pack according to the embodiment of the present invention.
FIG. 25 is a diagram illustrating a process of producing the battery pack according to the embodiment of the present invention.
FIG. 26 is a diagram illustrating an electric bicycle according to the embodiment of the present invention.

### DESCRIPTION OF EXEMPLARY EMBODIMENTS

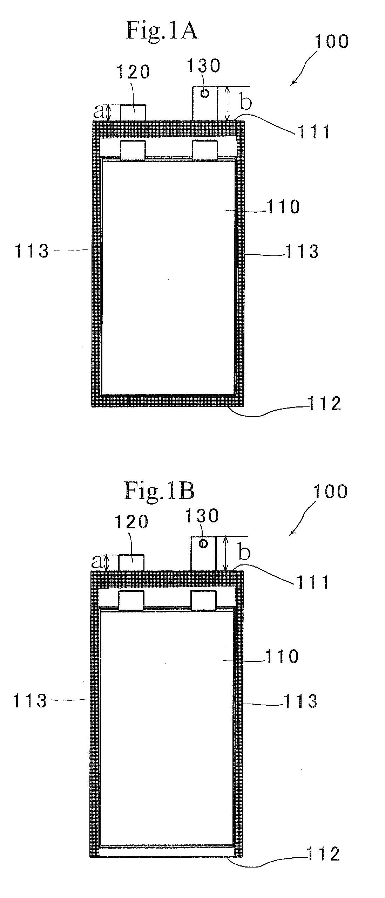

The following describes an embodiment of the present invention with reference to the accompanying drawings. FIG. 1 is a diagram showing a unit battery 100 that makes up a battery pack according to an embodiment of the present invention. What is used for the unit battery 100 is a lithium ion secondary battery in which charge and discharge take place as lithium ions move between positive and negative electrodes.

The unit battery 100 of the present invention has a flat shape and therefore is also referred to as a flat battery.

A main unit 110 of the unit battery has a structure in which the following components are stored in a film casingmaterial, which is in the shape of a rectangle in planar view: a laminated electrode assembly, in which a plurality of sheet positive electrodes and a pluralityof sheet negative electrodes are stacked via separators, and an electrolytic solution (both not shown). From an upper end portion 111 of the unit battery main unit 110, a positive-electrode pull-out tab 120 and a negative-electrode pull-out tab 130 are pulled out.

The positive-electrode pull-out tab 120 and the negative-electrode pull-out tab 130 are both in the shape of a plate, and are each connected directly, or via a lead body or the like, to the sheet positive electrodes and the sheet negative electrodes in the film casing material. The film casing material includes a heat-sealing resin layer on a plane facing the inside of the battery. Moreover, a film casing material is used for a plane facing the outside of the battery: the film casing material is made by stacking protective films on laminated metallic foil made of aluminum foil or the like.

More specifically, on a plane that is positioned on the outer-surface side of the aluminum foil, a member that has strength and heat resistance, such as nylon or polyethylene terephthalate, is stacked; on the inner-surface side, a material that is excellent in heat-sealing performance, such as polypropylene or polyethylene, is stacked.

With a battery element, in which positive and negative electrodes are stacked via separators, and an electrolytic solution stored in the film casing material, the periphery of the film casing material, i.e. the upper end portion 111, lower end portion 112 and two side end portions 113, is heat-sealed. Therefore, the inside thereof is hermetically sealed.

In the above unit battery 100, aluminum or aluminum alloy is used as a material of the positive-electrode pull-out tab 120; nickel, nickel-plated copper, or nickel-copper clad is generally used as a material of the negative-electrode pull-out tab 130. According to the present embodiment, the positive-electrode pull-out tab 120 made of aluminum and the negative-electrode pull-out tab 130 made of nickel are used.

The above has described the case in which the upper end portion 111, lower end portion 112 and two side end portions 113 of the battery element are heat-sealed with the film casing material. However, for example, one sheet of film casing material may be bent to cover the bat tery element, with three sides of the battery element heat-sealed to close an opening. In this case, any end portion can serve as a bending portion of the film casing material. However, it is preferred that the lower end portion 112 serve as a bending portion of the film casing material.

In order to make the battery pack of the present invention, a positive pull -out tab of a unit battery 100 and a negative pull-out tab of a unit battery 100, which is adjacent to the above unit battery 100, are mechanically bound together with bolts and nuts and therefore connected together electrically. In this case, the structure in which the aluminum positive-electrode pull-out tab 120 of the unit battery 100 and the nickel negative-electrode pull-out tab are mechanically bound together could lead to a decline in conductivity after a predetermined period of time has passed due to problems pertaining to differences in potential. Accordingly, in the battery pack of the present invention, at a point where a positive pull-out tab of a unit battery 100 and a negative pull-out tab, which is adjacent to the above unit battery 100, are mechanically bound together, the pull-out tabs are connected in such a way that the members made of nickel come in contact with each other.

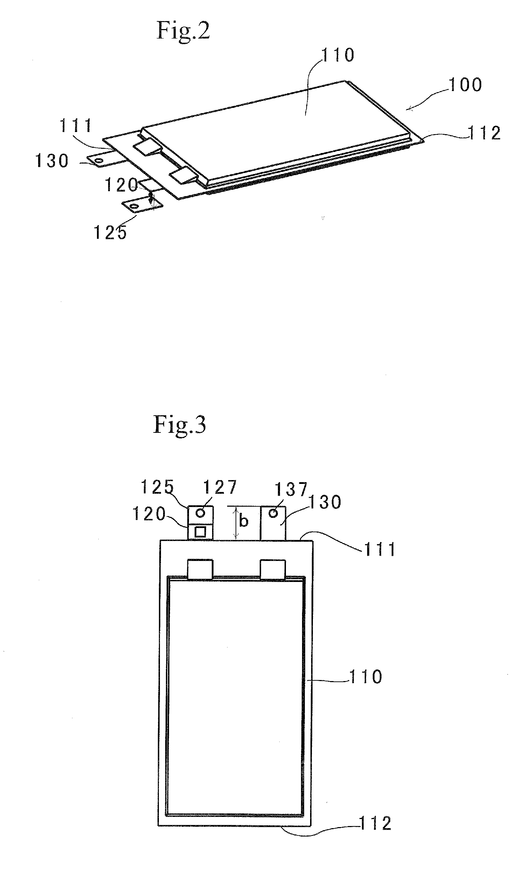

The configuration to achieve the above will be described. As shown in FIG. 1, in a process of making the battery pack, suppose that the aluminum positive-electrode pull-out tab 120 of the unit battery 100 has a length of a from the upper end portion 111, and the nickel negative-electrode pull-out tab 130 a length of b (b>a) from the upper end portion 111. Then, to the aluminum positive-electrode pull-out tab 120 having a length of a, a tab member 125 made of nickel is connected and added by means of ultrasonic waves so that the length from the upper end portion 111 comes to b (see FIGS. 2 and 3). In order to allow unit batteries 100 to be connected in series, a hole 127 is made on the tab member 125, which serves as a positive pull-out tab; a hole 137 is made on the negative-electrode pull-out tab 130. Incidentally, hereinafter, the entire pull-out tab, which is formed by connecting the tab member 125, is also referred to as a positive-electrode pull-out tab 120.

As described below, in the battery pack of the present invention, in a process of electrically connecting a plurality of unit batteries 100, the pull-out tabs having different polarities are connected together in such a way that the nickel members (the tab members 125 and the negative-electrode pull-out tabs 130) come in contact with each other. Accordingly, the electrically connected portions of the adjoining unit batteries turn out to be the portions that are made of the same type of metallic material and are connected electrically. Therefore, the problems pertaining to differences in potential do not arise, and it is substantially possible to prevent a decline over time in conductivity from occurring.

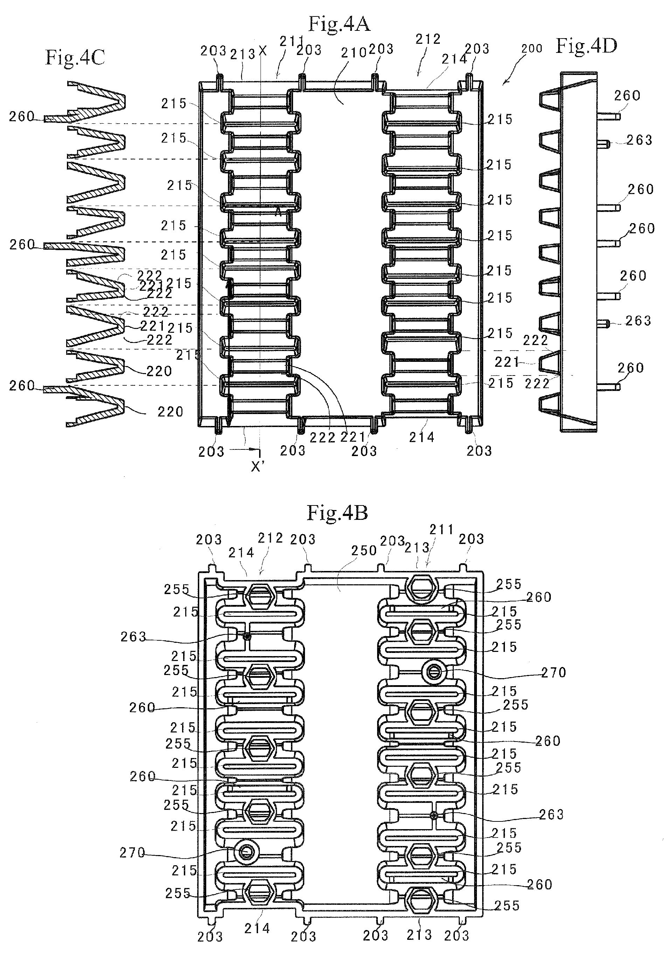

The following describes a holder member 200, which is used in electrically connecting the positive pull-out tabs and negative pull-out tabs of a plurality of unit batteries 100 in the battery pack of the embodiment of the present invention. FIG. 4 is a diagram illustrating the holder member 200. FIG. 4A is a diagram showing the holder member 200 seen from a first main surface side. FIG. 4B is a diagram showing the holder member 200 seen from a second main surface side. FIG. 4C is a cross-sectional view of FIG. 4A taken along X-X'. FIG. 4D is a side view of the holder member 200.

On the holder member 200, a first surface 210 and a second surface 250, which is on the opposite side of the holder member 200 from the first surface 210, are formed; the holder member 200 is a member made of synthetic resin such as ABS resin. In a first row 211 of the first surface 210 of the holder member 200, pull-out tab insertion holes 215 are formed side by side from top to bottom as shown in FIG. 4A. Similarly, in a second row 212 of the first surface 210, pull-out tab insertion holes 215 are formed side by side from top to bottom. When a unit battery 100 is attached to the holder member 200, the pull-out tab insertion holes 215 provided on the first surface 210 are used. The pull-out tab insertion holes 215 are holes passing therethrough from the first surface 210 to the second surface 250; and holes into which the pull-out tabs of the unit battery 100 can be inserted.

As shown in FIG. 4A, on the upper and lower sides of the first and second rows 211 and 212, pull-out tab guide ribs 203 are provided. A pull-out tab guidance section 213 is provided in such a way that the pull-out tab guidance section 213 is sandwiched between the pull-out tab guide ribs 203 of the first row 211. Moreover, a pull-out tab guidance concave section 214 is provided in such a way that the pull-out tab guidance concave section 214 is sandwiched between the pull-out tab guide ribs 203 of the second row 212.

In the first row 211, based on regulations by the pull-out tab guide ribs 203, a pull-out tab of an edge-side unit battery 100, out of a plurality of unit batteries 100 connected in series, is guided to the second surface 250 from the first surface 210 via the pull-out tab guidance section 213.

In the second row 212, based on regulations by the pull-out tab guide ribs 203, a pull-out tab of an edge-side unit battery 100, out of a plurality of unit batteries 100 connected in series, is guided to the second surface 250 from the first surface 210 via the pull-out tab guidance concave section 214.

Among a plurality of unit batteries 100 connected in series, a pull-out tab of a unit batter 100 that is not on the edge side passes through the pull-out tab insertion hole 215 and is attached to the holder member 200. In the upper and lower areas of the pull-out tab insertion hole 215 (as shown in FIG. 4A), pull-out tab guide projecting sections 220 are provided in such a way that the pull-out tab insertion hole 215 is sandwiched between the pull-out tab guide projecting sections 220, which are positioned on the upper and lower sides of the pull-out tab insertion hole 215. The pull-out tab guide projecting sections 220 are generally made up of a top section 221 and two tapered sides 222, which are seamlessly connected to the top section 221. When a pull-out tab of a unit battery 100 is inserted into a pull-out tab insertion hole 215, a space between the two tapered sides 222 becomes gradually narrower, making it easy to attach the unit battery 100 to the holder member 200. Therefore, it is possible to improve efficiency in connecting a plurality of unit batteries 100 in series and increase productivity.

To the second surface 250 of the holder member 200, a board 300 can be attached. On the board 300, the pull-out tabs of the adjacent unit batteries 100 are bent, put on each other and connected, resulting in an electrical connection. When the pull-out tabs of the adjacent unit batteries 100 are connected, the pull-out tabs are mechanically bound together with bolts and nuts. Accordingly, six nut housing sections 255 for housing nuts 256 are provided in the first row 211 of the second surface 250, and five in the second row 212. Moreover, on the second surface 250, divider pieces 260, which are designed to ensure insulation between the pull-out tab connection sections of a unit battery 100 that are formed on the board 300 or between pull-out tab connection sections and pull-out tabs, are provided at three locations in the first row 211 and at two locations in the second row 212.

Positioning projecting sections 263 are projections that help position the board 300 when the board 300 is attached to the holder member 200; one positioning projection section 263 is positioned in the first row 211, and the other in the second row 212. Moreover, one screw hole 270, which is used to bind the board 300 and the holder member 200 together after the board 300 is attached to the holder member 200 with the use of the above positioning projecting sections 263, is provided in the first row 211, and the other in the second row 212.

The following describes the configuration of the board 300 on which connection sections for the pull-out tabs of a plurality of unit batteries 100 are formed in the battery pack of the embodiment of the present invention.

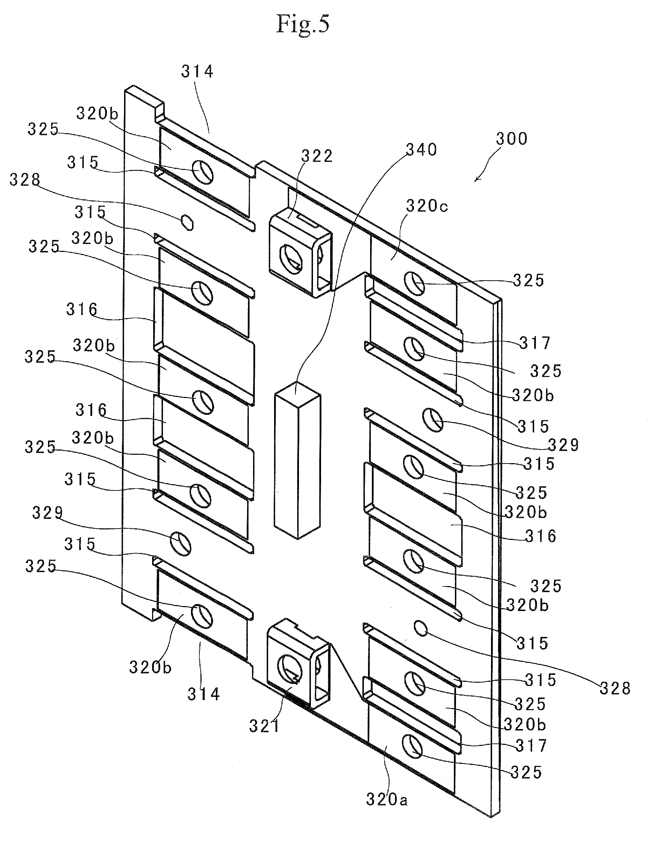

FIG. 5 is a perspective view of the board 300 that is used in connecting unit batteries 100 in series in the battery pack of the embodiment of the present invention.

The board 300, which is made by mainly using glass epoxy or the like as base material, is attached to the second surface 250 of the holder member 200 before being used. The peripheral shape of the board 300 substantially matches the peripheral shape of the second surface 250 of the holder member 200. At two locations on the periphery of the board 300, pull-out tab guidance notch sections 314 are formed so as to correspond to the pull-out tab guidance concave sections 214 of the holder member 200.

Moreover, on the board 300, pull-out tab extraction holes 315 are provided so as to correspond to the pull-out tab insertion holes 215 of the holder member 200. Moreover, on the board 300, divider piece extraction holes 317 are provided so as to correspond to the divider pieces 260 of the holder member 200. Furthermore, on the board 300, pull-out tab/divider piece extraction holes 316 are provided to support both the pull-out tab insertion holes 215 and divider pieces 260 of the holder member 200. The above holes are all through-holes that pass through the board 300 from one main surface to the other main surface; and are so formed that the pull-out tabs of unit batteries 100, the divider pieces 260 and the like can be inserted therein.

In areas where the pull-out tabs of unit batteries 100 are fixed to the board 300 with bolts and nuts, the following sections are provided: thin-film electrode sections 320a, 320b and 320c.

There is an electrical connection between a thin-film electrode sections 320a and a metallic positive terminal electrode washer 321, which is fixed to the board 300. There is an electrical connection between a thin-film electrode section 320c and a metallic negative terminal electrode washer 322, which is fixed to the board 300. To the positive terminal electrode washer 321 and the negative terminal electrode washer 322, the pull-out tabs of an edge portion of a unit battery 100 that is connected in series are connected. Therefore, the positive terminal electrode washer 321 and the negative terminal electrode washer 322 are used as terminals for charge and discharge of power for the battery pack.

Moreover, there is an electrical connection between a thin-film electrode section 320b and a terminal section, not shown, of a connector 340, allowing the potential for monitoring each unit battery 100 to be measured through the connector 340. Incidentally, the connector 340 may be formed so that a signal from a temperature measurement sensor (not shown) that measures temperatures of unit batteries 100 can be taken out.

For each of the thin-film electrode sections 320a, 320b and 320c, pull-out tab connection screwholes 325 are provided: pull-out tab connection bolts 257, which are used to fix the pull-out tabs of unit batteries 100, are inserted into the pull-out tab connection screw holes 325. To the thin-film electrode section 320a and the thin-film electrode section 320c, one pull-out tab of an edge-portion unit battery 100, out of the unit batteries 100 connected in series, is fixed. Meanwhile, two thin-film electrode sections 320b are fixed in such a way that the pull-out tabs of the adjoining unit batteries 100 are bent and put on each other.

On the board 300, two positioning holes 328 are formed so as to correspond to the positioning projecting sections 263 provided on the second surface 250 of the holder member 200. As the two positioning projecting sections 263 pass through the positioning holes 328, the holder member 200 and the board 300 can be easily positioned when being bound together, contributing to an improvement in productivity. Moreover, board fixing screw holes 329, which are formed on the board 300, are holes into which board fixing screws 271, which are used to fix the holder member 200 to the board 300, are inserted.

The following describes a battery protective member 400, which protects a plurality of unit batteries 100 at a time when the unit batteries 100 are connected in series and turned into a battery connecting structure 500 in the battery pack of the embodiment of the present invention.

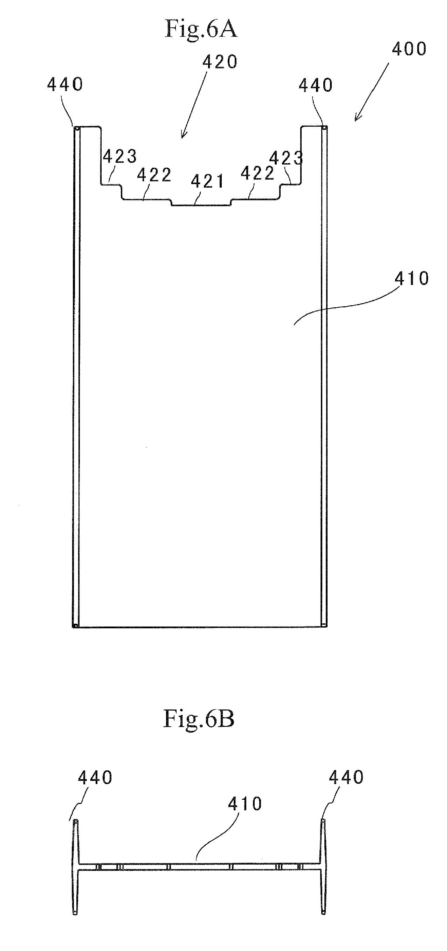

FIG. 6 is a diagram illustrating the battery protective member 400, which makes up the battery pack of the embodiment of the present invention. FIG. 6A is a diagram showing the battery protective member 400 in a way that faces a first plate section 410 to which a main surface of a unit battery 100 is bonded. FIG. 6B is a diagram showing the battery protective member 400 seen from an upper end of FIG. 6A.

When unit batteries 100 are placed, the battery protective member 400 of the present invention is inserted between the unit batteries 100 placed before being used.

The battery protective member 400 may be made of synthetic resin, such as ABS resin, polyethylene terephthalate resin or polycarbonate resin. The use of such a material enables a lightweight and inexpensive battery protective member 400 to be realized.

Moreover, the battery protective member 400 may also be made from a metallic member and a member made of synthetic resin with dispersed, highly heat-conductive material particles. The use of such a material enables a highly heat-conductive and lightweight battery protective member 400 to be realized.

More specifically, the metallic member is aluminum, aluminum alloy, or copper. The highly heat-conductive material particles are aluminum nitride, silicon nitride or alumina.

For the synthetic resin material, the following can be listed: ABS resin, polyethylene terephthalate resin, or polycarbonate resin. A material with highly heat-conductive material particles dispersed in the above resin can be listed.

Among the above substances, aluminum or aluminum alloy is suitable.

In the case of aluminum, aluminum alloy or the like, an alumite treatment film or insulating film is preferably formed on a surface. The above film prevents troubles from occurring even when a voltage applying section comes in contact with the protective member.

The first plate section 410 of the battery protective member 400 is a member that is sandwiched between a unit battery 100 and a unit battery 100 that is connected in series to the above unit battery 100. Meanwhile, second plate sections 440 are so provided as to extend in a direction perpendicular to the first plate section 410 from both edge portions of the first plate section 410. Therefore, as shown in FIG. 6B, the cross-sectional surface of the battery protective member 400 is in the shape of "H."

Moreover, a notch section 420, which are made up of the following, is formed on the first plate section 410: a first notch section 421, which is the deepest notch section; second notch sections 422, which are disposed on both sides of the first notch section 421 and are the second deepest notch sections after the first notch section 421; and third notch sections 423, which are disposed on both sides of the second notch sections 422 and are the shallowest notch sections.

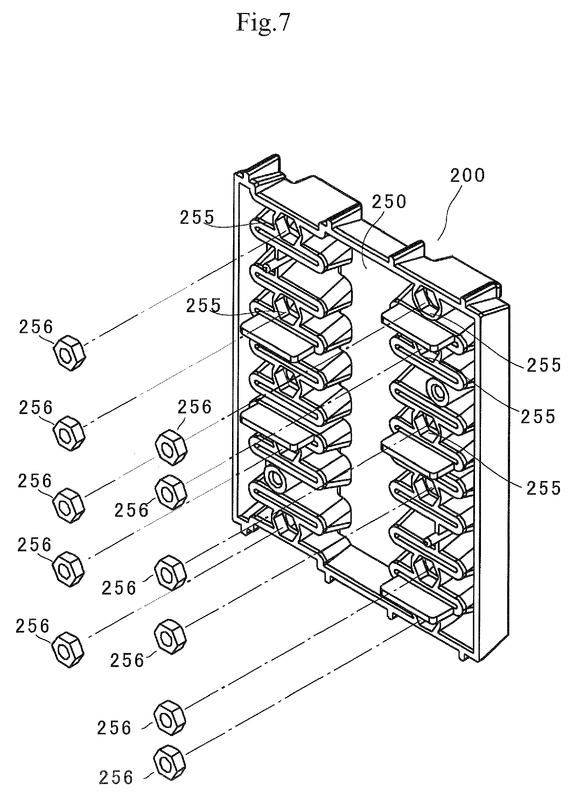

The following describes processes of producing, from each of the above members, a battery connecting structure 500 in which unit batteries 100 are connected, with reference to FIGS. 7 to 17. FIGS. 7 to 17 are diagrams illustrating the processes of producing the battery connecting structure 500, which makes up the battery pack of the embodiment of the present invention.

First, in a process shown in FIG. 7, nuts 256 are mounted in all the nut housing sections 255, which are provided on the second surface 250 of the holder member 200. The dimensions of the inner periphery of the nut housing sections 255 are so set that the nuts 256 cannot be easily removed once the nuts 256 are placed into the nut housing sections 255.

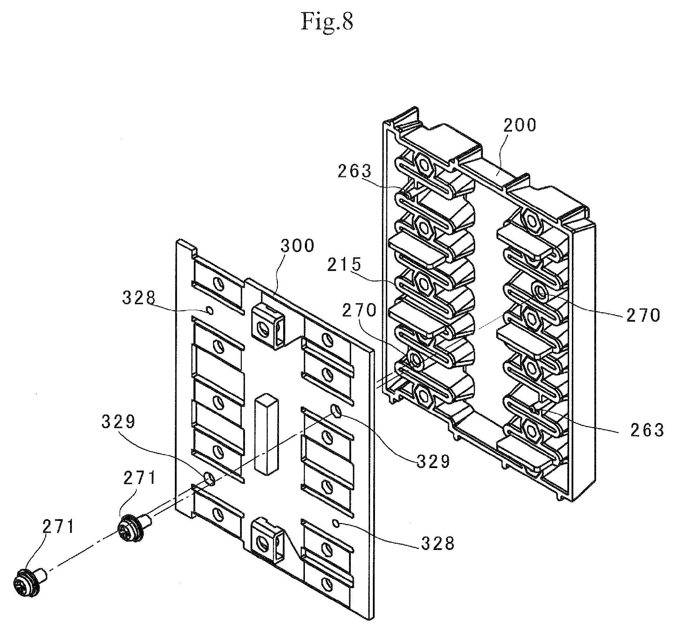

In a subsequent process shown in FIG. 8, the positioning projecting sections 263 of the holder member 200 are inserted into the positioning holes 328 of the board 300 so that the holder member 200 and the board 300 are positioned. Subsequently, two board fixing screws 271 are inserted into the board fixing screw holes 329 and screwed into screw holes 270. As a result, the holder member 200 is fixed to the board 300. Incidentally, for the board fixing screw holes 329, various kinds of screw can be used. However, the use of self-tapping screws helps improve work efficiency during the production process.

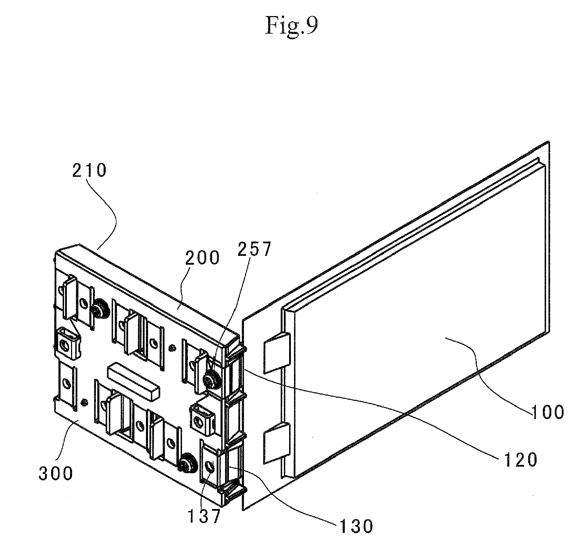

In a subsequent process shown in FIG. 9, a unit battery 100 is disposed on the first surface 210 of the holder member 200. The negative-electrode pull-out tab 130 of the unit battery 100 is bent so as to come in contact with the thin-film electrode section 320b of the board 300 with the help of the pull-out tab guidance concave section 214. Moreover, the positive-electrode pull-out tab 120 of the unit battery 100 is bent so as to come in contact with the thin-film electrode section 320a of the board 300 with the help of the pull-out tab guidance section 213. The pull-out tab connection bolts 257 are inserted into the holes 127 of the positive-electrode pull-out tab 120 and the pull-out tab connection screw holes 325; the pull-out tab connection bolts 257 are screwed into the nuts 256 housed in the nut housing sections 255. In this manner, the process of mounting the first unit battery 100 is completed.

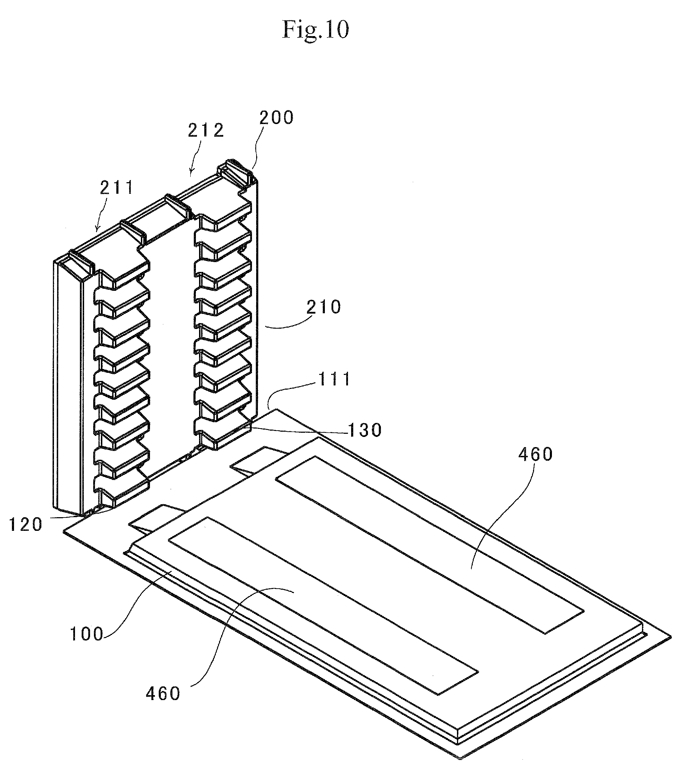

A subsequent process shown in FIG. 10 takes place on the first surface 210 of the holdermember 200. In the process, as shown in the diagram, two strips of two-sided adhesive tape 460 are attached to an upper main surface of the unit battery 100. The two-sided adhesive tapes 460 are used to fix the first unit battery 100, which is attached to the holder member 200, to a second unit battery 100, which is to be attached to the holder member 200. The reason the two strips of two-sided adhesive tape 460 are provided on the main surface of the unit battery 100 as shown in the diagram is to allow a spacer, described later, to be disposed between the two strips of two-sided adhesive tape 460 in order to improve productivity.

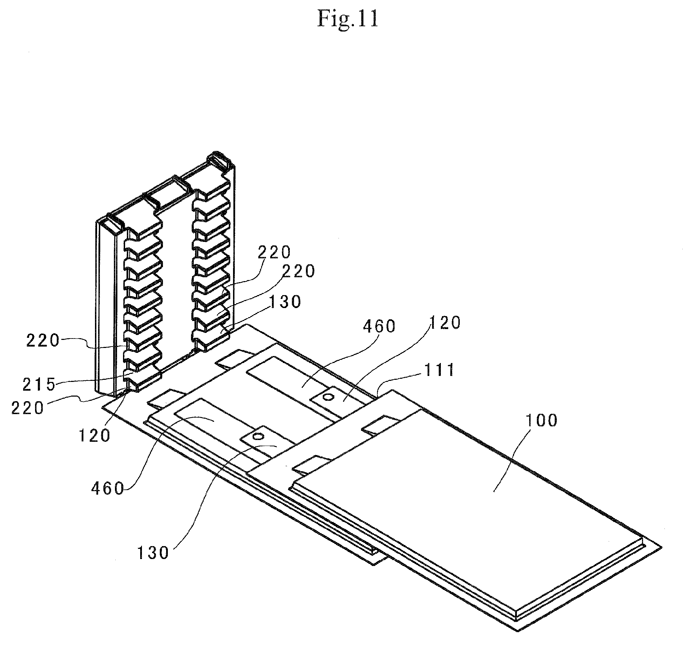

In a subsequent process shown in FIG. 11, a spacer (not shown) that is thicker than the two-sided adhesive tapes 460 is placed on the first unit battery 100 attached. Furthermore, two pull-out tabs of the second unit battery 100 slide on the spacer and are inserted into the pull-out tab insertion holes 215. As described above, the pull-out tab guide projecting sections 220 are disposed on the upper and lower sides of the two pull-out tab insertion holes 215. Furthermore, the tapered sides 222 are provided on the pull-out tab guide projecting sections 220. Therefore, a space between the upper and lower pull-out tab guide projecting sections 220 becomes gradually narrower, enabling the pull-out tabs of a unit battery to be easily guided to the pull-out tab insertion holes 215 of the holder member 200.

In this case, the positive-electrode pull-out tab 120 of the first unit battery 100 attached to the holder member 200 is disposed in the first row 211, and the negative-electrode pull-out tab 130 in the second row 212. On the other hand, the positive-electrode pull-out tab 120 of the second unit battery 100 attached to the holder member 200 is disposed in the second row 212, and the negative-electrode pull-out tab 130 in the first row 211. Hereinafter, in a process of sequentially placing unit batteries 100, the positive-electrode pull-out tabs 120 of the odd unit batteries 100 attached are disposed in the first row 211, and the negative-electrode pull-out tabs 130 in the second row 212. The positive-electrode pull-out tabs 120 of the even unit batteries 100 attached are disposed in the second row 212, and the negative-electrode pull-out tabs 130 in the first row 211. In this manner, in a direction in which the unit batteries 100 are placed or stacked, the unit batteries 100 are so disposed that the pull-out tabs of the adjacent unit batteries 100 face different directions. Accordingly, on the board 300, connection does not have to take place diagonally with respect to the placing or stacking direction.

After it is confirmed that the upper end portion 111 of the second unit battery 100 is pushed into until the upper end portion 111 hits the first surface 210 of the holder member 200, a subsequent task starts on the board 300.

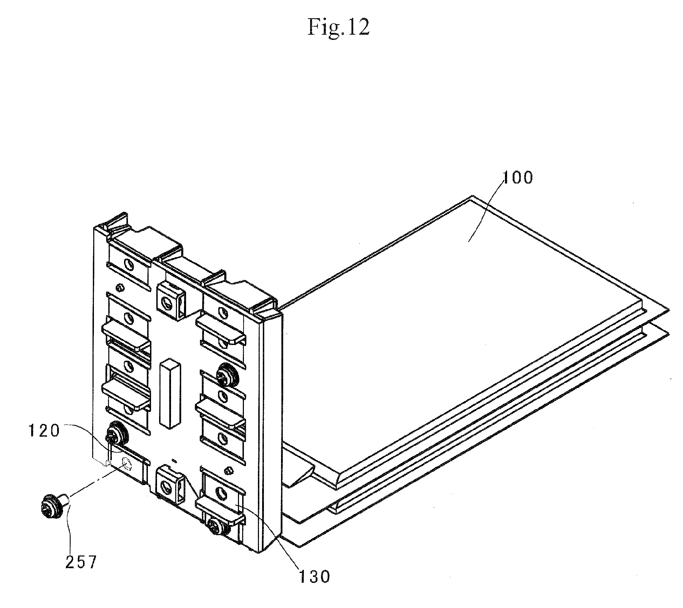

In a subsequent process shown in FIG. 12, the positive-electrode pull-out tab 120 of the second unit battery 100 attached is bent downward as shown in the diagram, and is put on the negative electrode 130 of the first unit battery 100 attached. After that, a pull-out tab connection bolt 257 is inserted into a hole of each pull-out tab, or pull-out tab connection screw hole 325, and is screwed into a nut 256, forming a connection portion for the negative-electrode pull-out tab 130 of the first unit battery 100 attached on the thin-film electrode section 320b and the positive-electrode pull-out tab 120 of the second unit battery 100 attached. In this manner, an electrical connection is completed.

Meanwhile, the negative-electrode pull-out tab 130 of the second unit battery 100 attached is bent upward as shown in the diagram, thereby making preparations for the positive-electrode pull-out tab 120 of the third unit battery 100 attached to be connected.

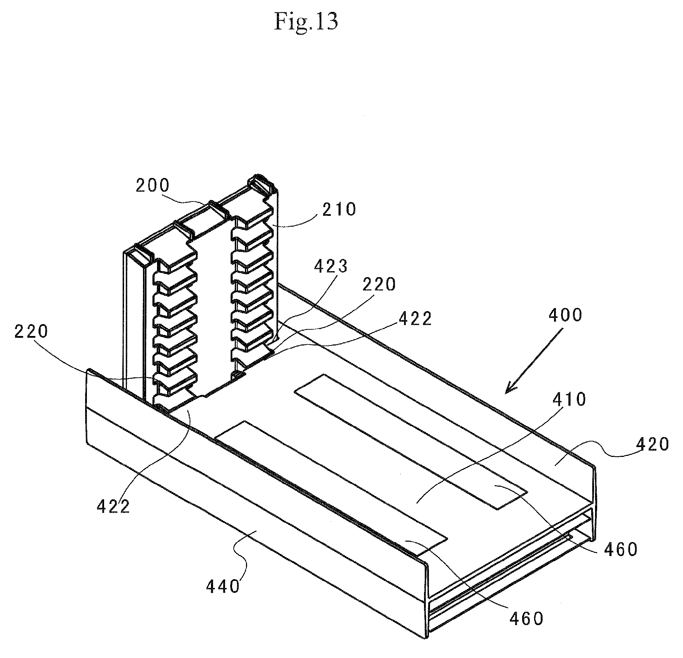

In a subsequent process shown in FIG. 13, in a similar way to the case where the second unit battery 100 is attached, a battery protective member 400 is attached with the use of a spacer. The upper surface of the second unit battery 100 and the lower surface of the battery protective member 400 are bonded together with two strips of two-sided adhesive tape 460. Furthermore, as shown in the diagram, two strips of two-sided adhesive tape 460 are attached to the upper surface of the battery protective member 400. With the use of the two-sided adhesive tapes 460, the battery protective member 400 is fixed to the third unit battery 100 attached to the holder member 200.

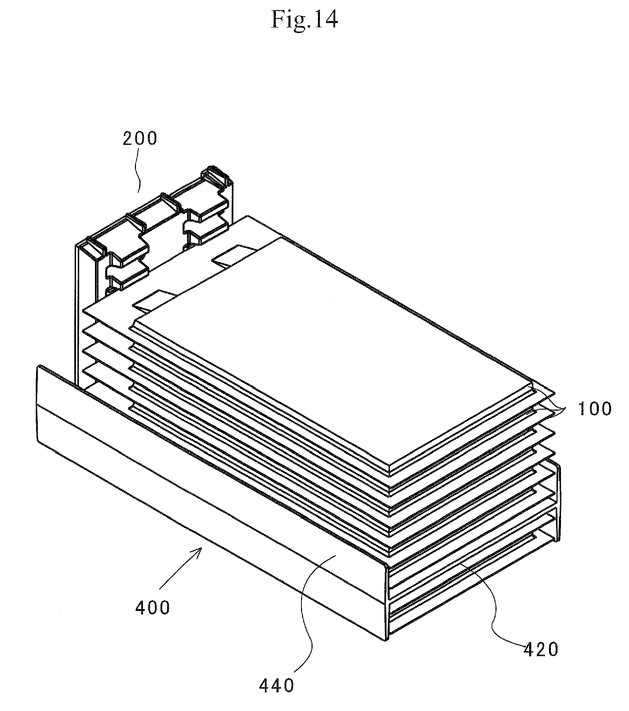

FIG. 14 shows the situation where the third to eighth unit batteries 100 are sequentially attached to the holder member 200 and the board 300 in a similar way to that described above. On the board 300, each time one unit battery 100 is attached, the pull-out tabs are bent and put on each other, and the pull-out tabs of the adjacent unit batteries 100 are connected by means of the pull-out tab connection bolts 257. In this manner, an electrical connection is realized.

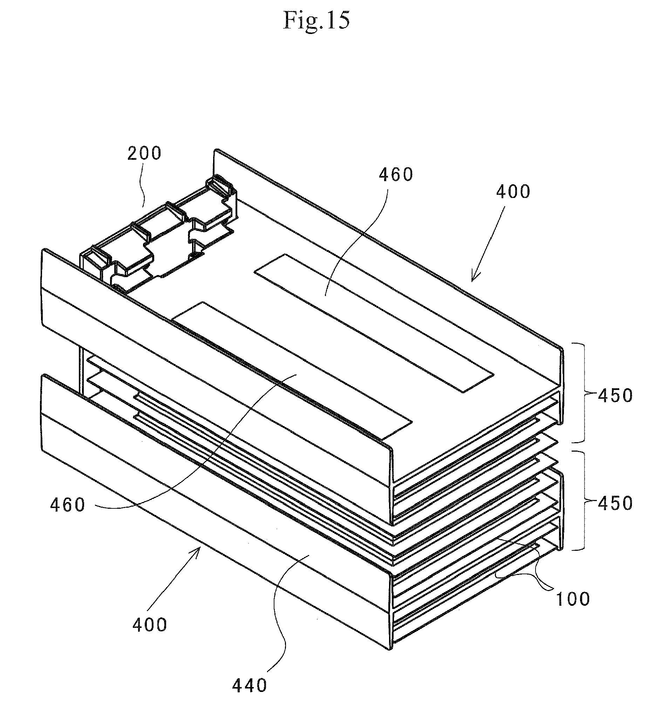

In a subsequent process shown in FIG. 15, what is shown is the situation where, after the eighth unit battery 100 is attached, still another battery protective member 400 is attached. In this manner, in the battery connecting structure 500 of the present embodiment, two battery protective members 400 are disposed so as to form two battery protective member blocks 450, which are protected by the battery protective members. In this manner, each unit battery 100 is protected against external shocks and the like.

Moreover, the unit batteries 100 are so placed as to rise above an upper end portion of a direction of the height between the first plate section 420 and the second plate section 440. In this manner, since the unit batteries are so placed as to rise above the upper end portion of the second plate section 440, there is an improvement in heat-release performance from the peripheries of the unit batteries.

Batteries that are placed so as to rise above the upper end portion of the above second plate section may be placed on an upper or lower battery protective member 400, or both, in the case of the diagram.

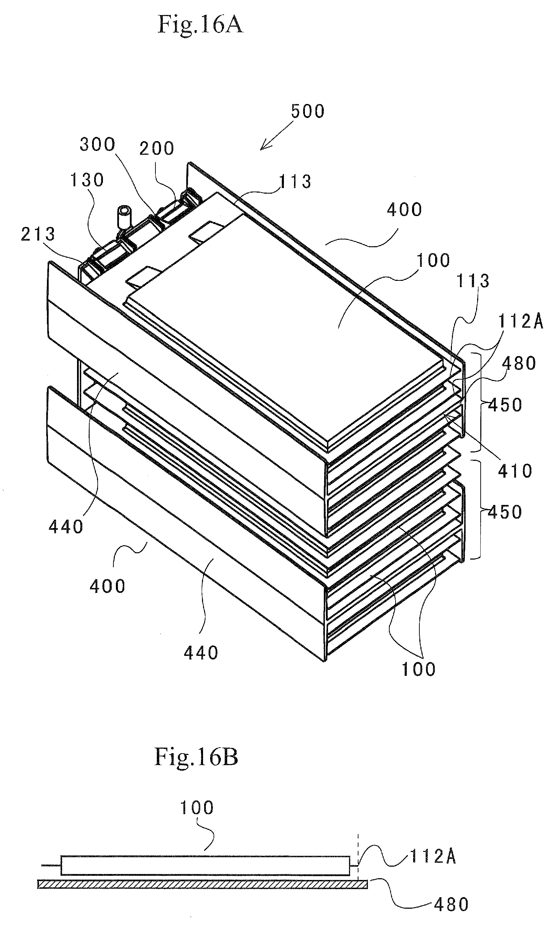

FIG. 16 shows the si tuation where, on the first plate section 420 of the battery protective member 400, the ninth and tenth unit batteries 100 are further attached to the holder member 200 and the board 300.

The negative-electrode pull-out tab 130 of the tenth unit battery 100 is fixed to a thin-film electrode section (not shown) of the board 300 with the use of the pull-out tab guidance section 213. As a result, the pull-out tabs of the first to tenth unit batteries 100 are each connected on the board 300, and a process of connecting ten unit batteries 100 in series is completed. In this manner, the battery connecting structure 500 including two battery protective member blocks 450 is completed.

As shown in FIG. 16A, as well as in FIG. 16B, which is a cross-sectional view illustrating the relationship between the first plate section and a unit battery, in the battery pack of the present invention, a vertical projection plane of an outer edge 112A of the lower end portion 112 of the unit battery 100 to the first plate section 410 is positioned closer to the center than a first plate section outer edge 480 is.

Therefore, even when a large shock is given to the battery pack, the outer edge 480 of the first plate section of the battery pack prevents the shock from being delivered directly to the unit battery 100. Therefore, it is definitely possible to protect the unit battery.

Moreover, in the battery connecting structure 500 shown in the diagram, the unit batteries 100 are so placed as to rise above the upper end portion of the direction of the height from a surface of the first plate section 420 of the second plate section 440 of a side of a battery protective member. The sides of some of the unit batteries are not covered with the second plate section 440.

Therefore, the air in the surrounding area flows into the placed unit batteries 100 from a space between the second plate sections 440 of the upper and lower battery protective members 400, contributing to an improvement in heat-release performance of the unit batteries 100.

A unit battery 100 covered with a film casing material has a heat-sealing section on the periphery. A side edge portion 113 is not bent; the side edge portion 113 is so large in size that the side edge portion 113 comes in contact with an inner surface of the second plate section 440 of the battery protective member 400. Therefore, the unit battery 100 can be precisely positioned on the battery protective member 400 and smoothly placed on the first plate section.

The film casing material is flexible. However, on the heat-sealing section, there is a portion that is higher in rigidity than other portions. Therefore, the heat-sealing section can sufficiently resist a force applied from the side edge portion 113, and therefore can withstand vibrations, shocks and other forces.

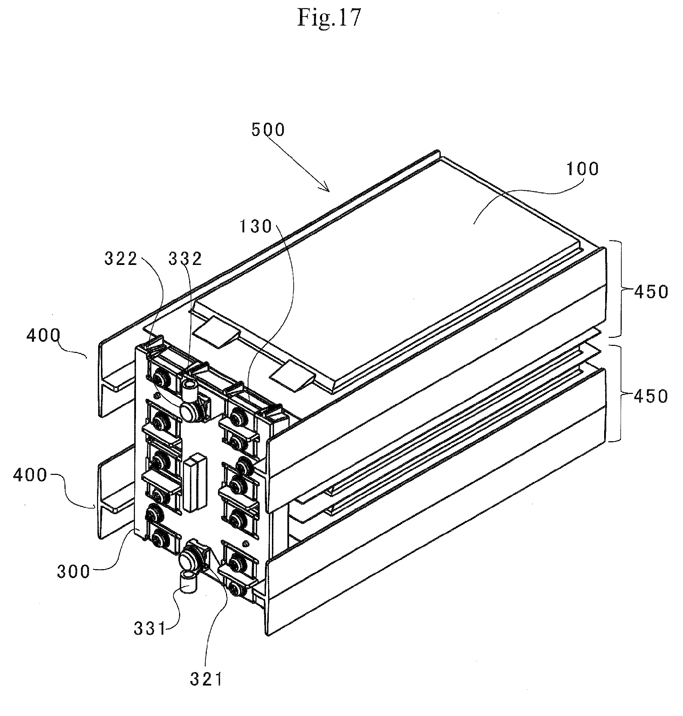

FIG. 17 is a diagram showing the battery connecting structure shown in FIG. 16 when seen from the board.

The battery connecting structure includes two battery protective member blocks 450. A process of charging and discharging ten unit batteries 100 connected in series takes place with the use of the positive terminal electrode washer 321 and negative terminal electrode washer 322 attached to the board 300. A terminal member 331 is attached to the positive terminal electrode washer 321, and a terminal member 332 to the negative terminal electrode washer 322.

As described above, the battery pack of the present invention is made in the followingmanner: the positive and negative pull-out tabs of a plurality of unit batteries 100 are inserted into the pull-out tab insertion holes 215 of the holder member 200, and the pull-out tabs having different polarities of a plurality of the unit batteries 100 are connected together on the board 300. Therefore, the production of battery packs is highly efficient, resulting in an improvement in productivity.

Moreover, the pull-out tabs having different polarities of a plurality of the unit batteries 100 are connected together on the board 300 with pull-out tab connection bolts 257 and nuts 256. Therefore, it is easy to connect a plurality of unit batteries 100 electrically. Thus, the production of battery packs is highly efficient, resulting in an improvement in productivity.

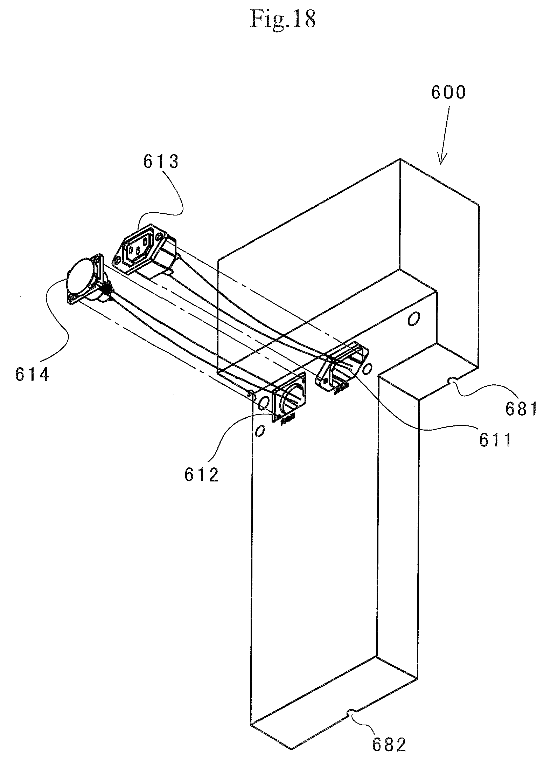

The following describes processes of making a battery pack of the present invention using the battery connecting structure 500, which is formed as described above, with reference to FIGS. 18 to 25.

In a process shown in FIG. 18, to a first case body 600 that houses the battery connecting structure 500, a discharge terminal 613 and a charge terminal 614 are fixed with screws with the help of a discharge terminal attachment concave section 611 and a charge terminal attachment concave section 612, which are provided on the first case body 600.

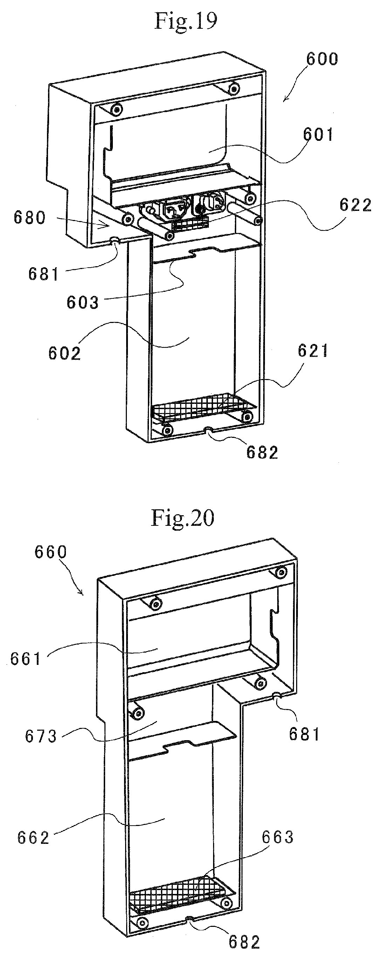

In a process shown in FIG. 19, a first cushioning member 621 is attached to a second housing section 602 of the first case body 600 wi th an adhesive or the like, and a second cushioning member 622 to a circuit housing section 603.

In the battery pack of the present invention, as shown in FIGS. 18 and 19, a drain hole 682 is provided on a bottom portion of the battery pack, and a drain hole 681 on an upper compartment section 680.

The battery pack is used outdoors. Therefore, rainwater or the like could get into the battery pack. Water condensation or the like could occur as unit batteries and protective circuit board sections in the battery pack heat up and cool down after the liquid gets in from the outside. Although measures have been taken to deal with the liquid in the battery pack, it is preferred to drain the liquid out as soon as possible.

According to the present invention, in addition to the drain hole 682 on the bottom portion, another drain hole is provided on the upper compartment section 680, a compartment in which a protective circuit board, which could be affected by the liquid, is installed. Therefore, it is possible to prevent an adverse effect associated with the liquid. In particular, a two-wheeled vehicle, such as an electric bicycle, could be laid down and abandoned when not in use. Therefore, the following structure is effective not only for the above example but for other cases: the inside of the case body is divided into a plurality of compartments in order to allow water to be drained out at any time. The following structure is effective: drain holes are provided in two or more compartments. In the case of the diagram, a drain hole is provided in a central portion of a compartment. However, a drain hole that is provided at a coroner of a compartment (around an area where two or three sides of an inner wall of a container cross each other) is also effective. Moreover, the following structure is also effective; drains holes are provided in a plurality of directions in the same compartment.

In a process shown in FIG. 20, to a second housing section 662 of a second case body 660, a third cushioning member 663 is attached with an adhesive or the like.

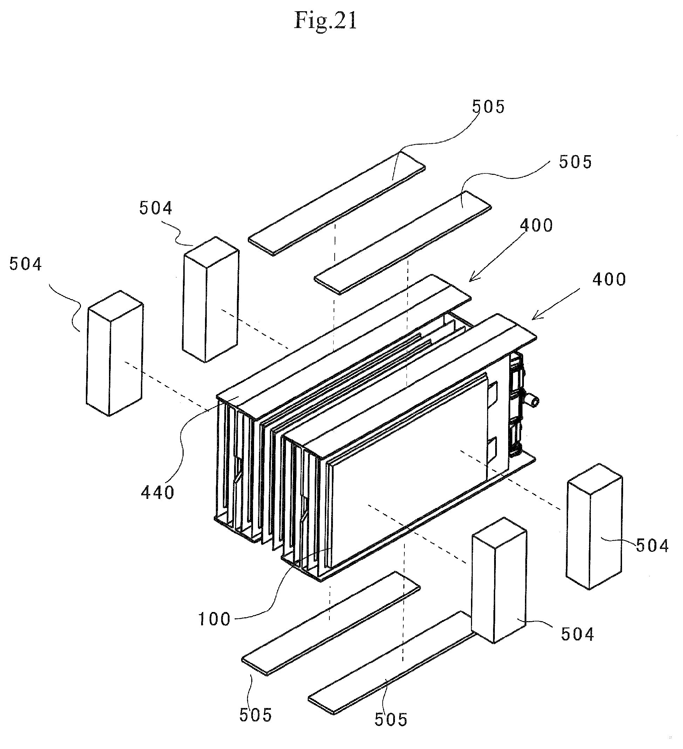

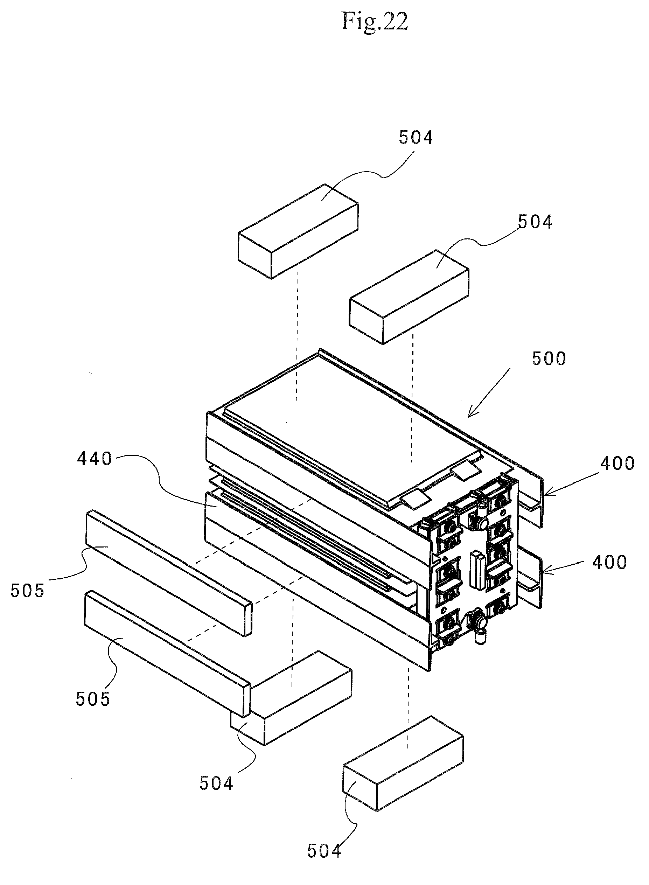

In processes shown in FIGS. 21 and 22, to the battery connecting structure 500, cushioning materials are attached. In the battery pack of the present invention, two structures, i.e. a first battery connecting structure 500 and a second battery connecting structure 500, are stored in the battery pack.

In a process shown in FIG. 21, as for the first batteryconnecting structure 500, fourth cushioning members 504, which are thick, are attached to an edge-portion unit battery 100; to the second plate sections of all the battery protective members, fifth cushioningmembers 505, which are thinner than the fourth cushioning members 504, are attached. An adhesive or the like is used in attaching the fourth cushioning members 504 and the fifth cushioning members 505 to parts.

Meanwhile, in a process shown in FIG. 22, as for the second battery connecting structure 500, fourth cushioning members 504 are attached to an edge-portion unit batter 100; only to the second plate sections of a one-side battery protective member, fifth cushioningmembers 505 are attached. As in the case described above, an adhesive or the like is used in attaching the fourth cushioning members 504 and the fifth cushioning members 505 to parts.

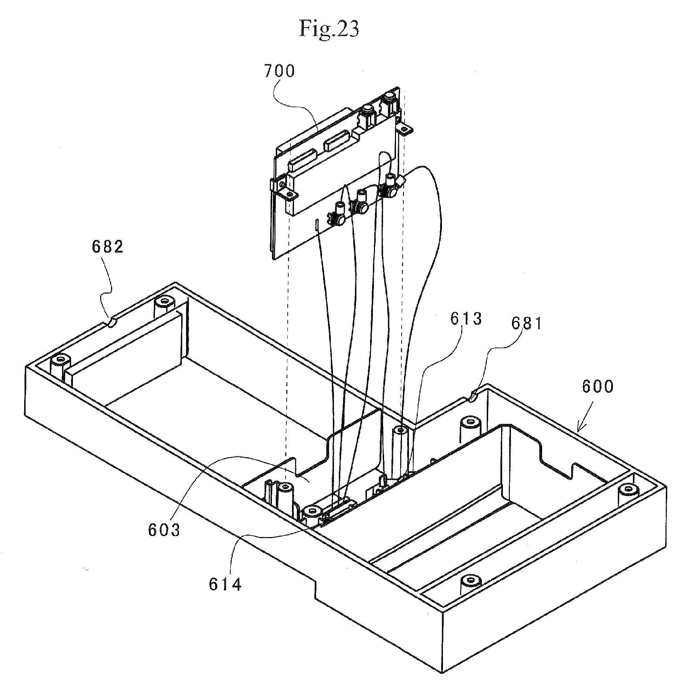

In a process shown in FIG. 23, a discharge terminal 613, a charge terminal 614 and a protective circuit board 700 are connected with wires. Moreover, the protective circuit board 700 is fixed to the circuit housing section 603 of the first case body 600 with screws.

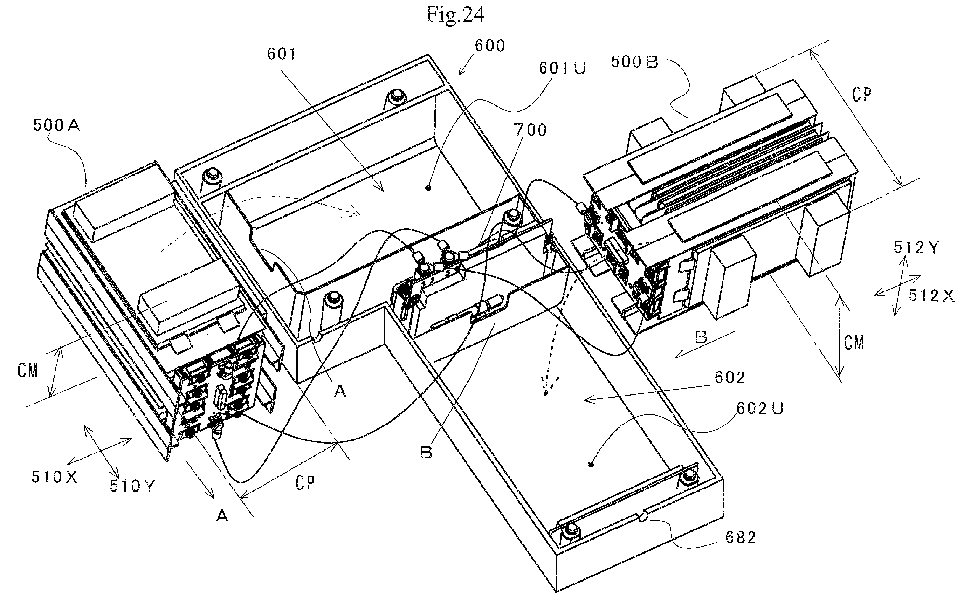

In a process shown in FIG. 24, the first battery connecting structure 500A, to which cushioning members have been attached, and the second battery connecting structure 500B, to which cushioning members have been attached, are connected to the protective circuit board 700 with wires. Moreover, the first battery connecting structure 500A is stored in the first housing section 601 of the first case body 600, and the second battery connecting structure 500B in the second housing section 602.

The directions of a surface on which the flat batteries of the first battery connecting structure housed in the first housing section 601 are placed are horizontal with respect to a bottom face 601U of the first housing section 601 as indicated by arrows 510X and 510Y. The directions of a surface on which the flat batteries of the second battery connecting structure are placed are substantially perpendicular to a bottom face 602 U of the second housing section 602 as indicated by arrows 512X and 512Y. The first and second housing sections are parallel to each other. Therefore, the surface on which the flat batteries of the first battery connecting structure are placed and the surface on which the flat batteries of the second battery connecting structure cross each other substantially at right angles.

When the battery pack is mounted on a bicycle, in the second housing section 602 that is positioned in a lower area, a surface of the shortest interval of a portion that is formed by a visible outline of a battery connecting structure and is substantially in the shape of a rectangular parallelepiped, i.e. a surface that is at right angles to a surface on which flat batteries of a battery connecting structure are placed in the case of the diagram, is placed so as to run parallel to the bottom face 602U of the second housing section 602.

On the bottom face 601U of the first housing section, a surface on which flat batteries of a battery connecting structure are placed is placed so as to be parallel to the bottom face 601U. The surface on which the flat batteries of the first battery connecting structure are placed and the surface on which the flat batteries of the second battery connecting structure are placed are disposed so as to cross each other at right angles. In this manner, the battery connecting structures, which are the same in shape and structure, are mounted in the first thick housing section 601 and in the second thin housing section 602.

Moreover, the first battery connecting structure 500A, to which cushioning members have been attached, is stored in the first housing section 601 in such a way that a direction CP in which clearance is positive is parallel to the bottom face 601U of the first housing section 601, and a direction CM in which clearance is negative is perpendicular to the bottom face of the first housing section 601.

Furthermore, the second battery connecting structure 500B, to which cushioning members have been attached, is also stored in the second housing section 602 in such a way that a direction CP in which clearance is positive is parallel to the bottom face 601U of the first housing section 601, and a direction CM in which clearance is negative is perpendicular to the bottom face 602U of the second housing section 602.

Incidentally, the positive clearance means that a distance of an outer surface between cushioning members is 1.5mm to 2mm smaller than the size of a housing section, and that a gap of 1.5mm to 2mm emerges. The negative clearance means that a distance of an outer surface between cushioning members is 3mm to 4mm larger than the size of a housing section, and that the cushioning members need to be crushed.

For the cushioning members, foam products having closed-cell foam bubbles maybe used. More specifically, Neoprene sponge is preferably used because the sponge has weather resistance and a broad operating temperature range: the Neoprene sponge is made by foaming Neoprene (manufactured by DuPont), whose main ingredient is chloroprene rubber.

The first battery connecting structure 500A, to which cushioning members have been attached, and the second battery connecting structure 500B, to which cushioning members have been attached, are each connected to the protective circuit board 700 with lead wires, which are substantially the same in length. Therefore, it is possible to shorten the wires, as well as to make the impedance between the protective circuit board and one battery connecting structure equal to the impedance between the protective circuit board and the other battery connecting structure.

As a result, when the two battery connecting structures are connected in parallel, it is possible to draw energy from batteries in an efficient manner.

According to the present invention, the fact that the wires are substantially equal in length means a tolerance of ±3mm for both wires in length.

Moreover, the first battery connecting structure 500A, the second battery connecting structure 500B, and the surface on which the flat batteries of the first battery connecting structure housed in the first housing section 601 are placed are horizontal with respect to the first housing section. Meanwhile, the surface on which the flat batteries of the second battery connecting structure are placed is perpendicular to the second housing section. Since the first and second housing sections are parallel to each other, the surface on which the flat batteries of the first battery connecting structure are placed is perpendicular to the surface on which the flat batteries of the second battery connecting structure are placed.

When the battery pack is mounted on a bicycle, in the second housing section 602 that is positioned in a lower area, a surface of the shortest interval of an portion that is formed by a visible outline of a battery connecting structure and is substantially in the shape of a rectangular parallelepiped, i.e. a surface that is at right angles to a surface on which flat batteries of a battery connecting structure are placed in the case of the diagram, is placed so as to run parallel to the bottom face of the second housing section 602.

On the bottom face of the first housing section 601, a surface on which flat batteries of a battery connecting structure are placed is placed so as to be parallel to the bottom face. The surface on which the flat batteries of the first battery connecting structure are placed and the surface on which the flat batteries of the second battery connecting structure are placed are disposed so as to cross each other at right angles. In this manner, the battery connecting structures, which are the same in shape and structure, are mounted in the first thick housing section 601 and in the second thin housing section 602.

In the battery pack that is mounted on a bicycle and in use, a flat battery is so housed in the first housing section 601, which is positioned in an upper area, such that a pulled-out direction A of a pull-out tab of the flat battery faces the A-side of the first housing section 601. In the battery pack that is in use, a flat battery is so housed in the second housing section 602, which is positioned in a lower area, such that a pulled-out direction B of a pull-out tab of the flat battery faces the B-side of the second housing section 602.

As a result, in any of the battery connecting structures housed in the first and second housing sections, in the battery pack that is in use, a flat battery is so disposed that a pulled-out direction of a pull-out tab of the flat battery faces upward rather than facing a direction that is substantially horizontal with respect to a horizontal surface.

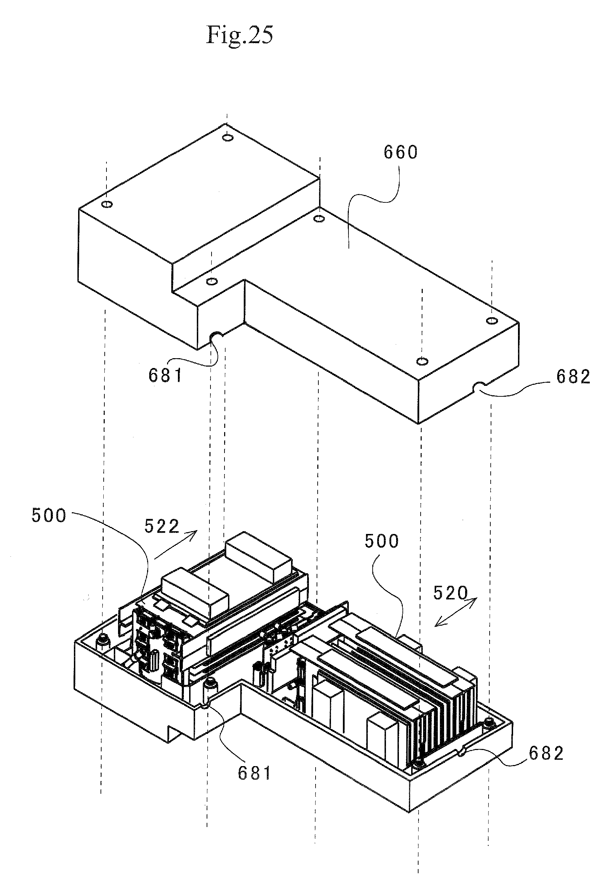

In a process shown in FIG. 25, the first case body 600 is fixed to the second case body 660 with screws. As a result, the battery pack of the present invention is completed.

In the process, the second case body is placed on the first case body 600. The second case body is fixed to the first case body 600 with screws as the second case body is pushed in a direction in which the clearance of the battery connecting structure to which cushioning members have been attached is negative. As a result, the battery pack of the present invention is completed; in the battery pack, the battery connecting structure does not move even when vibrations or shocks are applied.

After the completed battery pack is mounted on an electric bicycle, the following electric bicycle is completed: the first battery connecting structure 500, in which a direction 520 of a surface of the shortest interval of a portion that is substantially in the shape of a rectangular parallelepiped surrounding the battery connecting structure 500 is aligned with a running direction 522 of the bicycle, is disposed inside a lower portion of the battery pack mounted on the back-surface side of a seat tube, and another battery connection body is disposed above the first battery connecting structure.

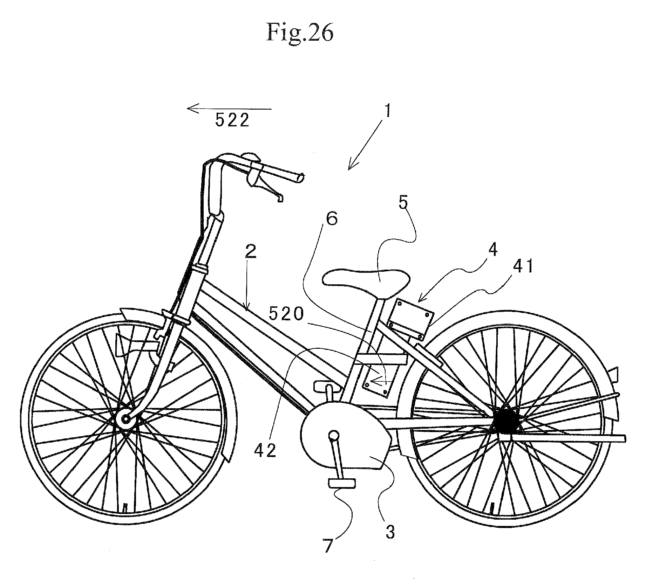

FIG. 26 is a diagram illustrating an electric bicycle on which the battery pack of the present invention is mounted.

An electric bicycle 1 has a frame 2 on which a battery pack 4 of the present invention is mounted. The battery pack 4 supplies power to a driving mechanism 3 of the electric bicycle.

As described above with reference to FIG. 24, the battery pack 4 includes two housing sections that are different in structure but accommodate the battery connecting structures that are the same in shape. A battery pack upper section 41, which is thick and corresponds to the first housing section 601 shown in FIG. 24, is positioned in a space between a saddle 5 and a rear wheel. Therefore, the battery pack upper section 41 does not come in contact with a leg or the like when a rider rides the bicycle.

Moreover, the battery connecting structure 500 that corresponds to the first housing section 602 shown in FIG. 24 is disposed in a battery pack lower portion 42 in such a way that the direction 520 of the surface of the shortest interval of the portion that is substantially in the shape of a rectangular parallelepiped surrounding the battery connecting structure 500 is aligned with the running direction 522 of the bicycle. The battery connecting structure 500 is thin even when being disposed in a space between a seat tube 6 and a rear wheel. Therefore, the battery connecting structure 500 does not come in contact with a pedal or leg even when a rider rotates a pedal 7. Thus, the driving of the bicycle is not affected.

The battery pack 4 of the present invention is mounted directly on the frame 2 that is subject to vibrations and shocks from a road surface. In the battery pack 4, measures have been taken against vibrations and shocks. Therefore, the battery pack 4 operates in a stable manner.

In the battery pack of the present invention, measures have been taken against vibrations and shocks. Therefore, the battery pack is not affected by vibrations and the like. Moreover, parts are different in external shape. Therefore, when the battery pack is mounted on an electric bicycle, what is provided is a bicycle on which a large-capacity battery pack is mounted in a way that does not obstruct a rider who is driving and operating. Moreover, when the wires for the two battery connecting structures mounted and the protective circuit board, which protects batteries during the charging and discharging of the batteries, are equal in length, the impedances of the two battery connecting structures are equal, resulting in a stable operation. Moreover, for a housing section of a battery connecting structure of a distance between outer surfaces of a cushioning member that is attached to a surface that extends in a direction perpendicular to the battery connecting structure, one clearance is made positive, and the other negative. Therefore, the battery connecting structure is easily stored and is fixed at a time when the other case body is being pushed. Therefore, the battery pack is more stable against vibrations and shocks. Moreover, a plurality of drain holes is provided, making it possible to smoothly drain out water, which gets into the inside or is caused by condensation. Therefore, it is possible to provide a highly reliable battery pack.

## Claims

1. A battery pack, comprising:
battery connecting structures in which a plurality of flat batteries is placed;
cushioning members that are disposed in two directions, which cross each other at right angles, of outer surfaces of the battery connecting structures; and
a housing section that houses the battery connecting structures in such a way that clearance between outer surfaces of the cushioning members of one direction is positive, and that clearance between outer surfaces of the cushioning members of the other direction is negative.

2. The battery pack according to claim 1, wherein:
the battery connecting structures include a battery protective member having a first plate section and a second plate section, which is integrally connected to both edge portions of a width direction of the first plate section and extends substantially in a direction perpendicular to both surfaces of the first plate section; and
the flat batteries are placed on the first plate section.

3. The battery pack according to claim 1 or 2, wherein
a direction in which the clearance is positive is a direction parallel to a bottom face of the housing section.

4. The battery pack according to any one of claims 1 to 3, wherein
a surface on which flat batteries are placed is formed on both surfaces of the first plate section.

5. The battery pack according to any one of claims 1 to 4, wherein
a flat-plate surface of the flat battery is put on the first plate section.

6. The battery pack according to any one of claims 1 to 5, wherein
the flat batteries are film-covered batteries.

7. The battery pack according to any one of claims 1 to 6, wherein
pull-out tabs of the flat batteries are taken out in a longer direction of the first plate section of the protective member.

8. The battery pack according to any one of claims 1 to 7, wherein
one adhesive side of a two-sided adhesive tape is attached to the flat battery, which then adheres to the first plate section or an adjoining flat battery surface.

9. An electric bicycle, comprising
the battery pack claimed in any one of claims 1 to 8.
